# EUROPEAN PATENT SPECIFICATION

(11) **EP 3 622 915 B1**
(45) Date of publication and mention of the grant of the patent: **28.04.2021**
(21) Application number: 18802466.5
(22) Date of filing: 17.05.2018
(51) Int. Cl.: A61C 7/34, A61C 7/28

(54) **SELF-LOCKING BRACKET AND OPENING METHOD THEREOF**
SELBSTVERRIEGELNDE KLAMMER UND ÖFFNUNGSVERFAHREN DAFÜR
BAGUE AUTOBLOQUANTE ET SON PROCÉDÉ D'OUVERTURE

(30) Priority: 19.05.2017 CN 201710361308
(43) Date of publication of application: 18.03.2020
(73) Proprietor: Guangzhou OO Medical Scientific Limited, Guangzhou, Guangdong 510530 (CN)
(72) Inventor: JI, Li, Guangzhou Guangdong 510000 (CN)
(74) Representative: Sun, Yiming
(86) International application number: PCT/CN2018/087252
(87) International publication number: WO 2018/210299

(56) References cited:
- EP-A1- 2 870 944
- CN-A- 104 958 114
- CN-A- 104 970 890
- CN-A- 107 019 569
- CN-U- 204 971 652
- CN-U- 204 971 653
- CN-U- 205 626 154
- US-A1- 2004 166 458
- US-A1- 2009 325 120

## Description

### TECHNICAL FIELD

The present invention relates to orthodontic appliances, in particular to a self-ligating orthodontic bracket

### BACKGROUND OF THE INVENTION

Orthodontic bracket is a principal component of orthodontic appliances, and an archwire applies an orthodontic force to patient's teeth through the orthodontic bracket. The brackets are used to affixed the archwire to patient's teeth, facilitating the archwire to deliver the orthodontic force, whereby a displacement of patient's teeth can be regulated, ultimately an orthodontic treatment is achieved.

Most of the prior self-ligating orthodontic brackets include a bracket body and a ligating slide, wherein the ligating slide is slidably connected to the bracket body so as to open or close an archwire slot on the bracket body.

In order to facilitate opening the archwire slot on the bracket body, the bracket body includes a tool receptacle configured to receive the tip of a tool that opens the ligating slide. However, the tool receptacle does not facilitate the orthodontists to open the archwire slot for a number of sakes. The orthodontists open the archwire slot generally in the following two ways: in the first aspect, specific tool is used to open archwire slot, which brings about great inconvenience to the orthodontist, making the orthodontic treatment more complicated, and prolonging the orthodontist's working hour; and in the second aspect, a force parallel to the archwire slot is applied by a probe to the ligating slide, which induces a static friction between the self-ligating orthodontic bracket and the tooth surface, and in turn reduces the stickiness of the self-ligating bracket to the tooth surface, whereby the brackets are easy to drop off, resulting in medical malpractices.

US 2009/325120 A1 and EP 2 870 944 A1 disclose a self-ligating orthodontic bracket according to the preamble of claim 1. **SUMMARY**

A self-ligating orthodontic bracket is provided in the present invention to facilitate opening the bracket and to make it easier for the orthodontists to correct teeth.

To these ends, the technical solution of the invention is as follows:
A self-ligating orthodontic bracket comprises a bracket body and a movable closure member, wherein the bracket body includes a first flank, a second flank and an archwire slot therebetween, running through the bracket body;
and the movable closure member is engaged with the second flank and movable relative thereto between an opened position in which an archwire is insertable into the archwire slot, and a closed position in which the movable closure member retains the archwire in the archwire slot;
at least one of the first flank and the movable closure member includes an opening slope provided at an inward end of the first flank and/or the movable closure member and adjacent to the archwire slot;
the archwire slot and the first flank co-form a first side surface, while the archwire slot and the second flank co-form a second side surface; the opening slope have a slope top and a slope bottom, and slopes downwardly to the first side surface.

The opening slope is a curved slope that includes a first side and a second side, wherein the slope top is an arc, and smoothly connects to the slope bottom along the first side and the second side, and wherein the opening slope is gradually narrowed down from the slope top to the slope bottom, and the slope bottom is an arc or a point.

The opening slope is an inclined surface that includes a first side and a second side, wherein the slope top smoothly connects to the slope bottom along the first side and the second side.

A sunken opening position is provided at an inward end or inward ends of the first flank and/or the movable closure member and adjacent to the archwire slot; the opening slope is configured at a bottom surface of the opening position, and the slope top is connected to the bottom surface.

The first flank includes the sunken opening position, which is configured at the inward end of the first flank and adjacent to the archwire slot;
the bottom surface of the opening position is a planar surface at which is the opening slope configured; the slope top is connected to the bottom surface of the opening position; the opening slope is a curved slope that includes the first side and the second side; the slope top is an arc smoothly connected to the slope bottom along the first side and the second side; the opening slope is gradually narrowed down from the slope top to the slope bottom; and the slope bottom is an arc or a point.

The opening position which is multi-layer and successively sunken is provided at the inward end or inward ends of the first flank and/or the movable closure member; wherein the opening position is adjacent to the archwire slot; and the opening slope is provided at the opening position.

Both the first flank and the movable closure member include the opening slopes, wherein the opening slope on the first flank and the opening slope on the movable closure member are symmetrical;
the opening slopes on the first flank and on the movable closure member are curved slopes, wherein the slope tops are arc-shaped, and the slope bottoms are arcs or points.

A receiving step is provided on the first side surface co-formed by the first bracket wing and the archwire slot, wherein the receiving step is disposed parallel to the archwire slot;
the opening slope is provided on the first flank; the slope top extends below the receiving step to the slope bottom, the slope bottom is disposed between an end surface of the receiving step and a bottom of the archwire slot.

The second flank includes a sliding groove at which the movable closure member is disposed and slid; both sides of the movable closure member protrude outwardly to form a first and a second lateral protrusions while both sides of the sliding groove respectively include a first and a second rails; the sliding groove is inverted t-shaped; And the two lateral protrusions respectively correspond to the two rails.

A bottom of the sliding groove is recessed downwardly to form a guiding slot extending along the sliding direction of the movable closure member, and the guiding slot is disposed at one of the two rails; a guiding slider is protruded downwardly from the movable closure member, extending along the sliding direction of the movable closure member; the guiding slider corresponds to the guiding slot.

An opening process of the self-ligating orthodontic bracket comprises the steps as follow:
when the self-ligating orthodontic bracket is in the closed position, a tip of an opening tool is positioned at the opening slope;
a first external force is applied to the opening tool, so as to make the tip of the opening tool slide along the opening slope, pushing the movable closure member to slide along the opening slope, thus the archwire slot is opened partially; a second external force is applied to the opening tool, so as to push the movable closure member to slide along the sliding direction, thus the archwire slot is opened completely.

It should be noted that the foregoing "first" and "second" do not represent a specific number or order, but are merely used to distinguish the features.

The detailed advantages and principles of the present invention are described below:
1. at least one of the first flank and/or the movable closure member includes the opening slope disposed at the inward end thereof and adjacent to the archwire slot. The opening slope slopes downwardly to the first side surface. The opening slope facilitates the orthodontists to open the archwire slot easily by common dental tools instead of a specific tool;
   in operation, the first external force is applied to the opening tool, so as to make the tip of the opening tool slide, pushing the movable closure member to slide along the opening slope; a second external force is applied to the opening tool, so as to push the movable closure member to slide along the sliding direction, thus the archwire slot is entirely opened;
   the opening method of the self-ligating orthodontic bracket is so easy for the orthodontists. The self-ligating orthodontic bracket with the opening slope is convenient for the orthodontists to operate, bringing about convenience to the orthodontists, guaranteeing the correction of teeth, avoiding the occurrence of medical malpractices.
2. the opening slope is a curved slope whose shape can be matched with many tools with different shapes. Common tools can be used by the orthodontists to open the archwire slot by virtue of the opening slope, resulting in higher efficiency of the opening.
3. the opening slope is a planar surface which is insertable for a tool with a bigger tip, simplifying the orthodontists' work by removal of tools replacement.
4. the opening position which is sunken downwardly is provided at the inward end of the first flank and/or the movable closure member and adjacent to the archwire slot. The opening slope is configured at a bottom surface of the opening position, and the slope top is connected to the bottom surface of the opening position. Since the volume of the self-ligating orthodontic bracket is small, the opening position can facilitate the orthodontists to put the tip of the opening tool into the opening slope through the opening position, so as to open the archwire slot in a better and more effective way. Simultaneously, the orthodontists can open the archwire slot in another way, which includes the steps as below: the tip of the opening tool is put into the opening position and then rotated, thus the archwire slot is opened.
5. the orthodontists can use many common tools to open the archwire slot with the aid of the opening position and the curved opening slope, reducing the orthodontists' working hours effectively.
6. the opening position which is multi-layer and successively sunken is provided at the inward end of the first flank and/or the movable closure member. And the opening slope is provided at the opening position. The opening position can facilitate the orthodontists to put the tip of the opening tool into the opening slope through the opening position, so as to open the archwire slot in a better and more effective way. Simultaneously, during the opening process, the archwire slot could be opened to various extent by the multi-layer and successively sunken opening position.
7. both the first flank and the movable closure member include the opening slopes, wherein the opening slopes are symmetrical. The tip of the opening tool is inserted into a groove co-formed by the opening slopes, to push the movable closure member to slide towards open the archwire slot. The opening method of the bracket is easy and convenient for the orthodontists to operate.
8. the receiving step is disposed to hold the movable closure member, avoiding the movable closure member from dropping off. The slope top gradually extends to the slope bottom along the direction towards the receiving step, and the slope bottom is disposed between the end surface of the receiving step and the bottom surface of the archwire slot. When the opening tool is inserted into the opening slope, the tip of the opening tool can reach a position below the bottom surface of the movable closure member, which is conducive for the opening tool to push the movable closure member to slide.
9. the two rails and the two lateral protrusions could protect the movable closure member from dropping off or getting loosen, and avoid reconfiguration of brackets and increasing the cost of correcting teeth thereby.
10. the guiding slot can direct the movable closure member to slide, ensuring the smooth sliding of the movable closure member and facilitating the opening of the archwire slot. The invention is defined by the appended claims.

### BRIEF DESCRIPTION OF THE DRAWINGS

FIG.1 is a schematic exploded view of a self-ligating orthodontic bracket in accordance with a first embodiment of the invention;
FIG.2 is a schematic perspective view of a bracket body of the self-ligating orthodontic bracket in accordance with the invention;
FIG.3 is a front view of the bracket body in accordance with the invention;
FIG.4 is a cross-sectional view of the bracket body in accordance with the invention;
FIG.5 is a front view of a movable closure member of the self-ligating orthodontic bracket in accordance with the invention;
FIG.6 is a schematic view of a bracket body of a self-ligating orthodontic bracket in accordance with an example not covered by the invention;
FIG.7 is a partial cross-sectional view of the bracket body in accordance with an example not covered by the invention;
FIG.8 is a schematic view of a bracket body of a self-ligating orthodontic bracket in accordance with an example not covered by the invention;
FIG.9 is a schematic perspective structural view of a self-ligating orthodontic bracket according to an example not covered by the invention;
FIG.10 is a schematic exploded view of the self-ligating orthodontic bracket in accordance with an example not covered by the invention;
FIG.11 a schematic perspective structural view of a self-ligating bracket according to an example not covered by the invention;
FIG.12 is a schematic exploded view showing the structure of the self-ligating bracket of an example not covered by the invention.

### Description of the reference signs:

10 denotes a bracket body; 11 denotes a first flank; 111 denotes an opening position; 12 denotes a second flank; 121 denotes a sliding groove; 1211 denotes a first rail; 1212 denotes a second rail; 1213 denotes a guiding slot; 13 denotes an archwire slot; 14 denotes a first side surface; 15 denotes a second side surface; 16 denotes a receiving step; 20 denotes an opening slope; 30 denotes a movable closure member; 31 denotes a first protrusion; 32 denotes a second protrusion; 33 denotes a guiding slider; 34 denotes an opening groove; 40 denotes a pad.

### DETAILED DESCRIPTION

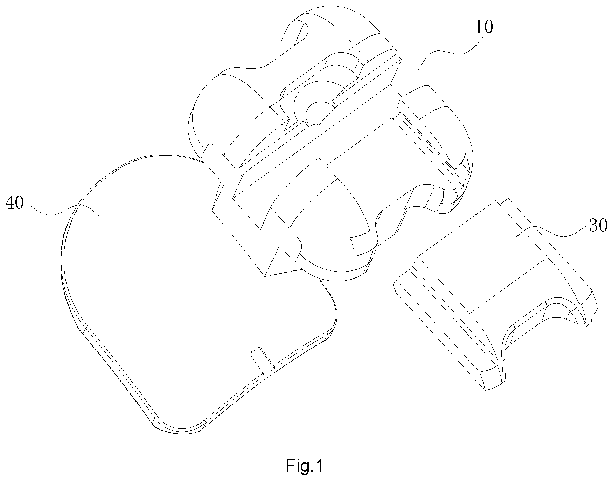

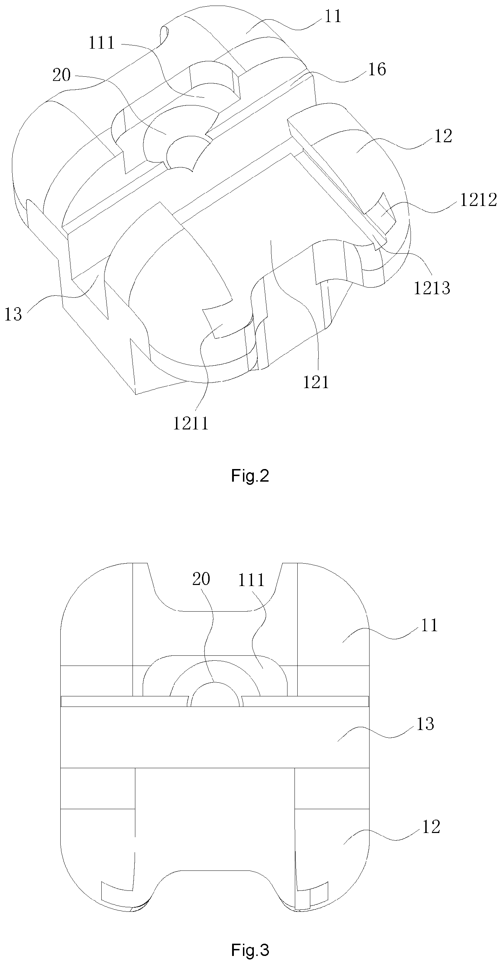

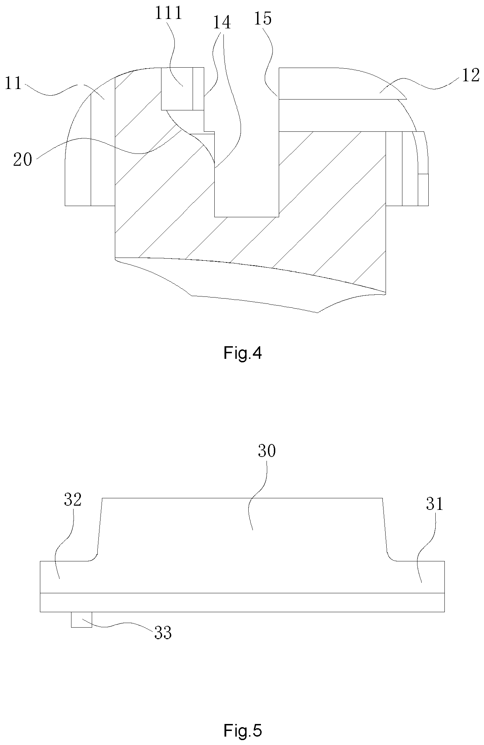

Referring now to FIGs. 1-5, a self-ligating orthodontic bracket comprises a bracket body 10 and a movable closure member 30, wherein the bracket body 10 includes a first flank 11, a second flank 12 and an archwire slot 13 therebetween, running through the bracket body 10,
and the movable closure member 30 is engaged with the second flank 12 and movable relative thereto between an opened position in which an archwire is insertable into the archwire slot 13, and a closed position in which the movable closure member 30 retains the archwire in the archwire slot 13;
at least one of the first flank 11 and the movable closure member 30 includes an opening slope 20 provided at an inward end of first flank 11 and/or the movable closure member 30 and adjacent to the archwire slot 13;
the archwire slot 13 and the first flank 11 co-form a first side surface 14, while the archwire slot 13 and the second flank 12 co-form a second side surface 15; the opening slope 20 has a slope top and a slope bottom, and slopes downwardly to the first side surface 14.

The first flank 11 includes a sunken opening position 111 provided at an inward end of the first flank 11 and adjacent to the archwire slot 13;
the bottom surface of the opening position 111 is a planar surface At which the opening slope 20 is configured, and the slope top is connected to the bottom surface of the opening position 111. The opening slope 20 is a curved slope that includes a first side and a second side, wherein the slope top is an arc smoothly connected to the slope bottom along the first side and the second side; the opening slope 20 is gradually narrowed down from the slope top to the slope bottom, and the slope bottom is an arc or a point. In this embodiment, the slope bottom is a point.

A receiving step 16 is provided on the first side surface 14 which is co-formed by the first flank 11 and the archwire slot 13, wherein the receiving step 16 is disposed parallel to the archwire slot 13;
the opening slope 20 is provided on the first flank 11. In this embodiment, the slope top extends below the receiving step 16 to the slope bottom, the slope bottom is disposed between an end surface of the receiving step 16 and the bottom of the archwire slot 13.

The second flank 12 includes a sliding groove 121 at which the movable closure member 30 is disposed and slid. Both sides of the movable closure member 30 protrude outwardly to form a first and a second lateral protrusions, 31 and 32, while both sides of the sliding groove 121 respectively include a first and a second rails, 1211 and 1212. The sliding groove 121 is inverted t-shaped. The two lateral protrusions 31 and 32 respectively correspond to the two rails 1211 and 1212.

A bottom of the sliding groove 121 is recessed downwardly to form a guiding slot 1213 extending along the sliding direction of the movable closure member 30, and the guiding slot 1213 is disposed at one of the two rails 1211, 1212. A guiding slider 33 is protruded downwardly from the movable closure member 30, extending along the sliding direction of the movable closure member 30.

The guiding slider 33 corresponds to the guiding slot 1213.

The guiding slot 1213 is disposed at at least one of the first rail 1211 and the second rail 1212. In this embodiment, the guiding slot 1213 is disposed at the second rail 1212.

The self-ligating orthodontic bracket includes a pad 40 connected to the bracket body 10.

An opening process of the self-ligating orthodontic bracket comprises the steps as follow:
a tip of an opening tool is positioned at the opening slope 20, at the moment the movable closure member 30 covers up the archwire slot 13 and the self-ligating orthodontic bracket is in closed position;
a first external force is applied to the opening tool, so as to make the tip of the opening tool slide along the opening slope 20, pushing the movable closure member 30 to slide along the opening slope 20, thus the archwire slot 13 is partially opened;
a second external force is applied to the opening tool, so as to make the tip of the opening tool push the movable closure member 30, sliding along the sliding direction, thus the archwire slot 13 is entirely opened.

The detailed advantages of the embodiment are described below:
1. at least one of the first flank 11 and/or the movable closure member 30 includes the opening slope 20 disposed at the inward end of the first flank 11 and/or the movable closure member 30 and adjacent to the archwire slot 13. The opening slope 20 slopes downwardly to the first side surface14. The opening slope 20 facilitates the orthodontists to open the archwire slot 13 easily by common dental tools instead of a specific tool.
   In operation, the first external force is applied to the opening tool, so as to make the tip of the opening tool slide, pushing the movable closure member 30 to slide along the opening slope 20;
   a second external force is applied to the opening tool, so as to push the movable closure member 30 to slide along the sliding direction, thus the archwire slot 13 is entirely opened. The opening method of the self-ligating orthodontic bracket is so easy for the orthodontists. The self-ligating orthodontic bracket with the opening slope 20 is convenient for the orthodontists to operate, bringing about convenience to the orthodontists, guaranteeing the correction of teeth, avoiding the occurrence of medical malpractices.
2. the sunken opening position 111 is provided at the first flank 11. The opening slope 20 is configured at the bottom surface of the opening position 111, and the slope top is connected to the bottom surface of the opening position 111. Since the volume of the self-ligating orthodontic bracket is small, the opening position 111 can facilitate the orthodontists to put the tip of the opening tool into the opening slope 20 through the opening position 111, so as to open the archwire slot 13 in a better and more effective way.
   The opening slope 20 is a curved slope whose shape can be matched with many tools with different shapes. Common tools can be used by the orthodontists to open the archwire slot 13 by virtue of the opening slope 20, resulting in higher efficiency of the opening.
   The orthodontists can use many common tools to open the archwire slot 13 with the opening position 111 and the opening slope 20 which is a curved slope, reducing the orthodontists' working hours effectively, improving the efficiency of opening the archwire slot.
   Simultaneously, the orthodontists can provide another method to open the archwire slot for the doctors. The doctors can put the tip of the opening tool into the opening position, apply a rotational force to the tool so as to open the archwire slot. During the operation of opening the archwire slot, the doctors can chose any one of two opening method depends on their own conditions.
3. the receiving step 16 is disposed to hold the movable closure member 30, avoiding the movable closure member 30 from dropping off. The slope top gradually extends to the slope bottom along the direction towards the receiving step 16, and the slope bottom is disposed between the end surface of the receiving step 16 and the bottom surface of the archwire slot 13. When the opening tool is inserted into the opening slope 20, the tip of the opening tool can reach a position below the bottom surface of the movable closure member 30, which is conducive for the opening tool to push the movable closure member 30 to slide.
4. the two rails 1211 or 1212 and the two lateral protrusions 31 and 32 could efficiently protect the movable closure member 30 from dropping off or getting loosen, and avoid reconfiguration of brackets and increasing the cost of correcting teeth thereby.
5. the guiding slot 1213 can guide the movable closure member 30 to slide, ensuring the smooth sliding of the movable closure member 30 and facilitating the opening of the archwire slot 13.

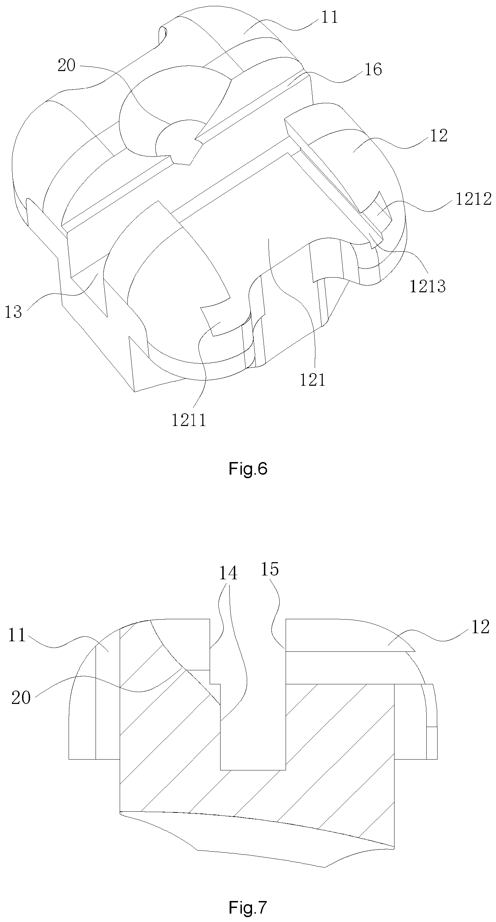

One example not covered by the invention Referring to the FIG.6-7, a self-ligating orthodontic bracket is provided. The bracket is analogous to an extent to the bracket in Fig.1-5 but the differences are as follows: The opening slope 20 is disposed on the first flank 11, and the slope top is connected to the top of the first flank 11. The opening slope 20 is a curved slope including a first side and a second side, wherein the slope top is an arc smoothly connected to the slope bottom along the first side and the second side. The opening slope 20 is gradually narrowed down from the slope top to the slope bottom, and the slope bottom is an arc or a point. The slope bottom is a point.

The detailed advantages are described below:
The opening slope 20 is a curved slope whose shape can be matched with many tools with different shapes. Common tools can be used by the orthodontists to open the archwire slot 13 by virtue of the opening slope 20, resulting in higher efficiency of the opening.

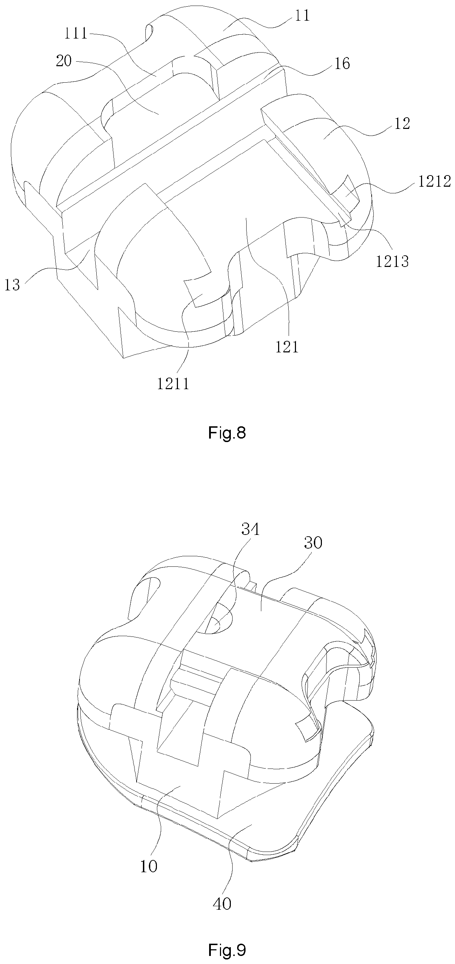

The rest structure of the this bracket can be referred to the first bracket so details are not described herein. Another example not covered by the invention Referring to the FIG.8, a self-ligating orthodontic bracket is provided. The bracket is analogous to an extent to the bracket in Fig.1-5 but the differences are as follows: The sunken opening position 111 is provided at an inward end of the first flank 11 and adjacent to the archwire slot 13. The opening slope 20 is configured at the bottom surface of the opening position 111, and the slope top is connected to the bottom surface of the opening position 111.

The bottom surface of the opening position 111 is the opening slope 20. The opening slope 20 is an inclined planar surface including a first side and a second side. The slope top smoothly connects to the slope bottom along the first side and the second side. The slope bottom is connected to the receiving step 16.

The detailed advantages are described below:
The sunken opening position 111 is provided at the inward end of the first flank 11. The opening slope 20 is configured at the bottom surface of the opening position 111, and the slope top is connected to the bottom surface of the opening position 111. Since the volume of the self-ligating bracket is small, the opening position can facilitate the orthodontists to put the tip of the opening tool into the opening slope through the opening position 111, so as to open the archwire slot 13 in a better and more effective way.

The opening slope is a planar surface, which is insertable for a tool with a bigger tip, simplifying the orthodontists' work by removal pf tools replacement.

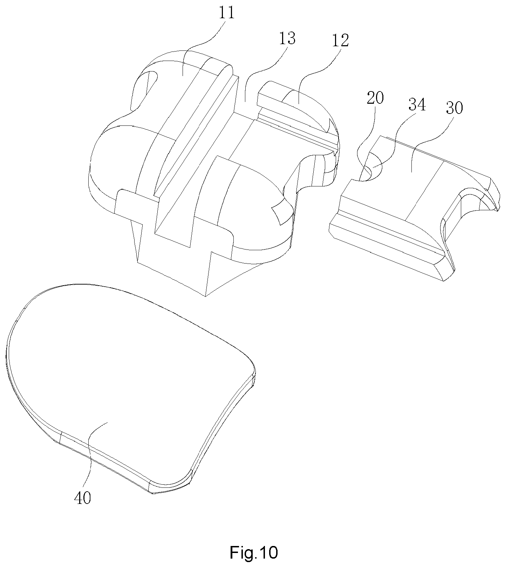

The rest structure of this bracket can be referred to the first bracket, so details are not described herein. Another example not covered by the invention Referring to the FIG.9-10, a self-ligating orthodontic bracket is provided. The bracket is analogous to an extent to the bracket in the Fig.1-5 the differences are as follows: The opening slope 20 is disposed at the movable closure member 30. The slope top is connected to the top surface of the movable closure member 30. The opening slope 20 includes a first side and a second side, and smoothly connects to the slope bottom along the first side and the second side. The opening slope 20 forms an opening groove 34 at the inward end of the movable closure member 30.

The opening slope 20 is a curved slope including a first side and a second side, the slope top is an arc. The slope top 20 smoothly connects to the slope bottom along the first side and the second side. The opening slope 20 is gradually narrowed down from the slope top to the slope bottom. The slope bottom is an arc or a point.

The detailed advantages are described below:
The opening slope 20 is disposed at the movable closure member 30. The opening slope 20 forms an opening groove 34 at the inward end of the movable closure member 30. With the aid of the opening groove 34, the tip of the opening tool can be inserted into the movable closure member 30, pushing the movable closure member 30 to slide along the sliding direction, whereby the archwire slot 13 is opened.

The opening slope 20 is a curved slope whose shape can be matched with many tools with different shapes. Common tools can be used by the orthodontists to open the archwire slot 13 by virtue of the opening slope 20, resulting in higher efficiency of the opening.

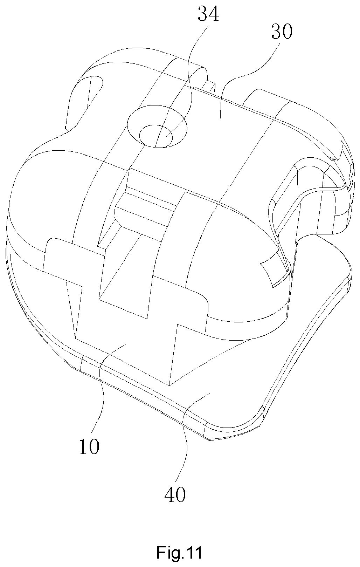

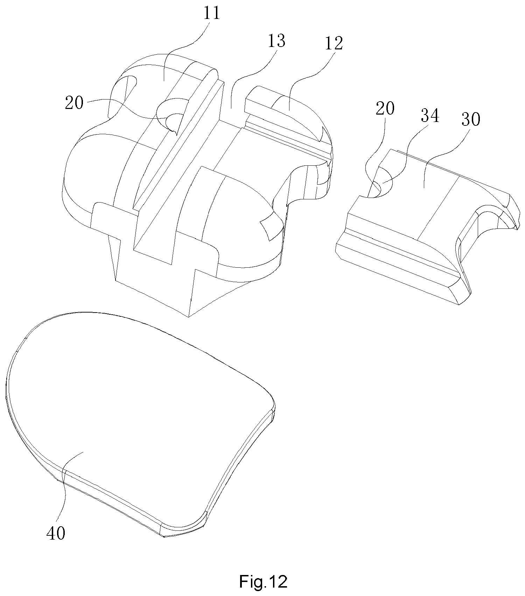

The rest structure of this bracket can be referred to the first bracket, so details are not described herein. Another example not covered by the invention Referring to FIG.11-12, a self-ligating orthodontic bracket is provided. The bracket is analogous to an extent to the bracket in Fig. 1-5, but the differences are as follows: Both the first flank 11 and the movable closure member 30 include the opening slopes 20, wherein the opening slope 20 on the first flank 11 and on the movable closure member 30 are symmetrical. The opening slope 20 on the first flank 11 and on the movable closure member 30 are curved slopes. The slope tops are both arcs. The opening slopes 20 is gradually narrowed down from the slope top to the slope bottom. The slope bottoms are arcs or points.

The slope top on the first flank 11 is connected to the top of the first flank 11, while the slope top on the movable closure member 30 is connected to the top surface of the movable closure member 30, the slope tops on the first flank 11 and on the movable closure member 30 are points.

The detailed advantages are described below:
Both the first flank 11 and the movable closure member 30 include the opening slopes 20, wherein the opening slope 20 on the first flank 11 and on the movable closure member 30 are symmetrical. The tip of the opening tool is inserted into a groove co-formed by the opening slopes 20, pushing the movable closure member 30 to slide, thus the archwire slot 13 is opened. The opening method of the bracket is easy and convenient for the orthodontists to operate.

The rest structure of this bracket can be referred to the first bracket so details are not described herein. Another example not covered by the invention Referring to FIG.1-12, a self-ligating orthodontic bracket is provided. The bracket analogous to an extent to the bracket in the Fig.1-5 but the differences are as follows: An opening position 111 which is multi-layer and successively sunken is provided at the inward end of the first flank 11 and/or the movable closure member 30, wherein the opening position 111 is adjacent to the archwire slot 13. The opening slope 20 is positioned at the opening position 111.

The detailed advantages are described below:
The opening position 111 which is multi-layer and successively sunken is provided at the inward end of the first flank 11 and/or the movable closure member 30. The opening slope 20 is provided at the opening position 111. The opening position 111 can facilitate the orthodontists to put the tip of the opening tool into the opening slope 20 through the opening position 111, so as to open the archwire slot 13 in a better and more effective way. Simultaneously, during the opening process, the archwire slot could be opened to various extent by the multi-layer and successively sunken opening position.

## Claims

1. A self-ligating orthodontic bracket, comprising:
a bracket body (10) and a movable closure member (30), the bracket body (10) includes a first flank (11), a second flank (12) and an archwire slot (13) therebetween, running through the bracket body (10), the archwire slot (13) and the first flank (11) co-forming a first side surface (14) of the bracket body (10), and the archwire slot (13) and the second flank (12) co-forming a second side surface (15) of the bracket body (10);
wherein the movable closure member (30) is engaged with the second flank (12) and movable to open/close the archwire slot (13);
an opening slope (20) is disposed at an inward end of the first flank (11) and adjacent to the archwire slot (13);
the opening slope (20) includes a slope top and a slope bottom, and slopes downwardly to the first side surface (14), **characterized in that** a sunken opening position (111) is provided at an inward end of the first flank (11) and adjacent to the archwire slot (13), wherein a bottom surface of the opening position (111) is a planar surface at which is the opening slope (20) configured; the slope top is connected to the bottom surface of the opening position (20); wherein the opening slope (20) is a curved slope that includes a first side and a second side; wherein the slope top is an arc smoothly connected to the slope bottom along the first side and the second side; the opening slope (20) is gradually narrowed down from the slope top to the slope bottom, and the slope bottom is an arc or a point.

2. The bracket of claim 1, wherein the opening slope (20) is an inclined surface, and wherein the slope top smoothly connects to the slope bottom along the first side and the second side.

3. The bracket of any one of claims 1 and 2, wherein the opening slope (20) is configured at the bottom surface of the opening position (111), and the slope top is connected to the bottom surface of the opening position (111).

4. The bracket of any one of claims 1 and 2, wherein the sunken opening position (111) is multi-layered and successively sunken, and wherein the opening slope (20) is provided at the sunken opening position (111).

5. The bracket of claim 1, wherein both the first flank (11) and the movable closure member (30) include the opening slope (20), wherein the parts of the opening slope (20) on the first flank (11) and on the movable closure member (30) are symmetrical;
wherein the parts of the opening slope (20) are curved slopes; wherein tops of the parts are arcs, and the parts of the opening slope (20) are narrowed down from the tops to the slope bottom.

6. The bracket of any one of claims 1 and 2, wherein a receiving step (16) is provided on the first side surface (14) co-formed by the first flank (11) and the archwire slot (13), wherein the receiving step (16) is disposed parallel to the archwire slot (13);
wherein the opening slope (20) is provided on the first flank (11), the slope top extends below the receiving step (16) to the slope bottom, and the slope bottom is disposed between an end surface of the receiving step (16) and a bottom of the archwire slot (13).

7. The bracket of claim 1, wherein the second flank (12) includes a sliding groove (121) along which the movable closure member (30) is disposed and slid, both sides of the movable closure member (30) protrude outwardly to form a first and a second protrusions (31 and 32), and both sides of the sliding groove (121) respectively include a first and a second rails (1211 and 1212), wherein the sliding groove (121) is inverted t-shaped, and the two lateral protrusions (31 and 32) respectively correspond to the two rails (1211 and 1212).

8. The bracket of claim 7, wherein a bottom of the sliding groove (121) is recessed downwardly to form a guiding slot (1213) extending along the sliding direction of the movable closure member (30), and the guiding slot (1213) is disposed at one of the two side rails (1211 and 1212), wherein a guiding slider (33) is protruded downwardly from the movable closure member (30), extending along the sliding direction of the movable closure member (30), and the guiding slider (33) corresponds to the guiding slot (1213).

## Patentansprüche

1. Selbstligierendes orthodontisches Bracket, welches Folgendes umfasst:
einen Bracket-Körper (10) und ein bewegliches Verschlusselement (30), wobei der Bracket-Körper (10) eine erste Flanke (11), eine zweite Flanke (12) und einen Bogendrahtschlitz (13) dazwischen aufweist, welcher durch den Bracket-Körper (10) verläuft, wobei der Bogendrahtschlitz (13) und die erste Flanke (11) gemeinsam eine erste Seitenfläche (14) des Bracket-Körpers (10) bilden und der Bogendrahtschlitz (13) und die zweite Flanke (12) gemeinsam eine zweite Seitenfläche (15) des Bracket-Körpers (10) bilden;
wobei das bewegliche Verschlusselement (30) mit der zweiten Flanke (12) im Eingriff steht und zum Öffnen/Schließen des Bogendrahtschlitzes (13) bewegt werden kann;
eine Öffnungsneigung (20) an einem inneren Ende der ersten Flanke (11) und angrenzend an den Bogendrahtschlitz (13) angeordnet ist;
die Öffnungsneigung (20) eine Neigungskrone und eine Neigungssohle aufweist und sich zu der ersten Seitenfläche (14) nach unten neigt, **dadurch gekennzeichnet, dass**
eine versenkte Öffnungsposition (111) an einem inneren Ende der ersten Flanke (11) und angrenzend an den Bogendrahtschlitz (13) vorgesehen ist, wobei es sich bei einer Sohlenfläche der Öffnungsposition (111) um eine planare Fläche handelt, an welcher die Öffnungsneigung (20) konfiguriert ist; die Neigungskrone mit der Sohlenfläche der Öffnungsposition (20) verbunden ist; wobei es sich bei der Öffnungsneigung (20) um eine gebogene Neigung handelt, die eine erste Seite und eine zweite Seite aufweist; wobei es sich bei der Neigungskrone um einen Bogen handelt, der entlang der ersten Seite und der zweiten Seite nahtlos mit der Neigungssohle verbunden ist; sich die Öffnungsneigung (20) von der Neigungskrone zur Neigungssohle allmählich verjüngt, und es sich bei der Neigungssohle um einen Bogen oder einen Punkt handelt.

2. Bracket nach Anspruch 1, wobei es sich bei der Öffnungsneigung (20) um eine geneigte Fläche handelt und wobei die Neigungskrone entlang der ersten Seite und der zweiten Seite nahtlos mit der Neigungssohle verbunden ist.

3. Bracket nach einem der Ansprüche 1 und 2, wobei die Öffnungsneigung (20) an der Sohlenfläche der Öffnungsposition (111) konfiguriert ist und die Neigungskrone mit der Sohlenfläche der Öffnungsposition (111) verbunden ist.

4. Bracket nach einem der Ansprüche 1 und 2, wobei die versenkte Öffnungsposition (111) mehrschichtig und sukzessive versenkt ist und wobei die Öffnungsneigung (20) an der versenkten Öffnungsposition (111) vorgesehen ist.

5. Bracket nach Anspruch 1, wobei sowohl die erste Flanke (11) als auch das bewegliche Verschlusselement (30) die Öffnungsneigung (20) aufweisen, wobei die Teile der Öffnungsneigung (20) an der ersten Flanke (11) und an dem beweglichen Verschlusselement (30) symmetrisch sind;
wobei die Teile der Öffnungsneigung (20) gebogene Neigungen sind; wobei es sich bei Kronen der Teile um Bögen handelt und sich die Teile der Öffnungsneigung (20) von den Kronen zur Neigungssohle verjüngen.

6. Bracket nach einem der Ansprüche 1 und 2, wobei eine Aufnahmestufe (16) an der ersten Seitenfläche (14) vorgesehen ist, die durch die erste Flanke (11) und den Bogendrahtschlitz (13) gemeinsam gebildet wird, wobei die Aufnahmestufe (16) parallel zum Bogendrahtschlitz (13) angeordnet ist;
wobei die Öffnungsneigung (20) an der ersten Flanke (11) vorgesehen ist, sich die Neigungskrone unterhalb der Aufnahmestufe (16) zur Neigungssohle erstreckt und die Neigungssohle zwischen einer Endfläche der Aufnahmestufe (16) und einer Sohle des Bogendrahtschlitzes (13) angeordnet ist.

7. Bracket nach Anspruch 1, wobei die zweite Flanke (12) eine Schiebenut (121) aufweist, entlang welcher das bewegliche Verschlusselement (30) angeordnet ist und verschoben wird, wobei beide Seiten des beweglichen Verschlusselementes (30) nach außen hervorstehen, um einen ersten und einen zweiten Überstand (31 und 32) zu bilden, und beide Seiten der Schiebenut (121) entsprechend eine erste und eine zweite Schiene (1211 und 1212) aufweisen,
wobei die Schiebenut (121) umgekehrt t-förmig ist und die beiden seitlichen Überstände (31 und 32) entsprechend mit den beiden Schienen (1211 und 1212) übereinstimmen.

8. Bracket nach Anspruch 7, wobei eine Sohle der Schiebenut (121) nach unten ausgespart ist, um einen Führungsschlitz (1213) zu bilden, der sich entlang der Schieberichtung des beweglichen Verschlusselementes (30) erstreckt, und der Führungsschlitz (1213) an einer der beiden Seitenschienen (1211 und 1212) angeordnet ist, wobei ein Führungsschieber (33) nach unten aus dem beweglichen Verschlusselement (30) hervorsteht, der sich entlang der Schieberichtung des beweglichen Verschlusselementes (30) erstreckt, und der Führungsschieber (33) mit dem Führungsschlitz (1213) übereinstimmt.

## Revendications

1. Bracket orthodontique à auto-ligature, comprenant :
un corps de bracket (10) et un membre de fermeture mobile (30), le corps de bracket (10) inclut un premier flanc (11), un second flanc (12) et une fente de fil d'arc (13) entre eux, passant à travers le corps de bracket (10), la fente de fil d'arc (13) et le premier flanc (11) co-formant un premier côté (14) du corps de bracket (10) et la fente de fil d'arc (13) et le second flanc (12) co-formant un second côté (15) du corps de bracket (10) ;
dans laquelle le membre de fermeture mobile (30) est engagé avec le second flanc (12) et mobile pour ouvrir/fermer la fente de fil d'arc (13) ;
une pente d'ouverture (20) est disposée à une extrémité tournée vers l'intérieur du premier flanc (11), et adjacente à la fente de fil d'arc (13) ;
la pente d'ouverture (20) inclut un haut de pente et un bas de pente, et descend vers le bas vers le premier coté (14), **caractérisée en ce**
**qu'**une position d'ouverture en creux (111) est prévue à une extrémité tournée vers l'intérieur du premier flanc (11), et adjacente à la fente de fil d'arc (13), dans laquelle une surface inférieure de la position d'ouverture (111) est une surface planaire sur laquelle la pente d'ouverture (20) est configurée ; le haut de pente est connecté à la surface inférieure de la position d'ouverture (20) ; dans laquelle la pente d'ouverture (20) est une pente incurvée qui inclut un premier côté et un second côté ; dans laquelle le haut de pente est un arc connecté en douceur au bas de pente le long du premier côté et du second côté ; la pente d'ouverture (20) est rétrécie graduellement vers le bas, du haut de pente vers le bas de pente, et le bas de pente est un arc ou un point.

2. Bracket selon la revendication 1, dans laquelle la pente d'ouverture (20) est une surface inclinée, et dans laquelle le haut de pente se connecte en douceur au bas de pente le long du premier côté et du second côté.

3. Bracket selon l'une quelconque des revendications 1 ou 2, dans laquelle la pente d'ouverture (20) est configurée sur la surface inférieure de la position d'ouverture (111) et le haut de pente est connecté à la surface inférieure de la position d'ouverture (111).

4. Bracket selon l'une quelconque des revendications 1 ou 2, dans laquelle la position d'ouverture en creux (111) est multi-couches et successivement en creux, et dans laquelle la pente d'ouverture (20) est prévue sur la position d'ouverture en creux (111).

5. Bracket selon la revendication 1, dans laquelle le premier flanc (11) et le membre de fermeture mobile (30) incluent la pente d'ouverture (20), dans laquelle les parties de la pente d'ouverture (20) sur le premier flanc (11) et sur le membre de fermeture mobile (30) sont symétriques ;
dans laquelle les parties de la pente d'ouverture (20) sont des pentes incurvées ; dans laquelle des hauts des parties sont des arcs, et les parties de la pente d'ouverture (20) rétrécissent vers le bas, des hauts vers le bas de pente.

6. Bracket selon l'une quelconque des revendications 1 ou 2, dans laquelle un étage de réception (16) est prévu sur le premier côté (14) co-formé par le premier flanc (11) et la fente de fil d'arc (13), dans laquelle l'étage de réception (16) est disposé parallèle à la fente de fil d'arc (13) ;
dans laquelle la pente d'ouverture (20) est prévue sur le premier flanc (11), le haut de pente s'étend en-dessous de l'étage de réception (16) vers le bas de pente, et le bas de pente est disposé entre une surface d'extrémité de l'étage de réception (16) et un bas de la fente de fil d'arc (13).

7. Bracket selon la revendication 1, dans laquelle le second flanc (12) inclut une rainure de glissement (121) le long de laquelle le membre de fermeture mobile (30) est disposé et glisse, les deux côtés du membre de fermeture mobile (30) font saillie vers l'extérieur pour former des première et seconde saillies (31 et 32), et les deux côtés de la rainure de glissement (121) incluent respectivement des premier et second rails (1211 et 1212), dans laquelle la rainure de glissement (121) est en forme de T inversé, et les deux saillies latérales (31 et 32) correspondent respectivement aux deux rails (1211 et 1212).

8. Bracket selon la revendication 7, dans laquelle un bas de la rainure de glissement (121) est en creux vers le bas pour former une fente de guidage (1213) s'étendant le long de la direction de glissement du membre de fermeture mobile (30), et la fente de guidage (1213) est disposée sur un des deux rails de guidage (1211 et 1212) latéraux, dans laquelle une coulisse de guidage (33) est en saillie vers le bas à partir du membre de fermeture mobile (30), s'étendant le long de la direction de glissement du membre de fermeture mobile (30), et la coulisse de guidage (33) correspond à la fente de guidage (1213).
